Europäisches Patentamt

**European Patent Office**

**Office européen des brevets**

(11) Veröffentlichungsnummer: **0 054 994**
**B1**

(12) **EUROPÄISCHE PATENTSCHRIFT**

(45) Veröffentlichungstag der Patentschrift:
01.02.84

(51) Int. Cl.³: **C 01 B 13/11**

(21) Anmeldenummer: **81201343.1**

(22) Anmeldetag: **10.12.81**

(54) Anordnung zur Erzeugung von Ozon durch elektrische Entladung.

(30) Priorität: **23.12.80 CH 9515/80**

(43) Veröffentlichungstag der Anmeldung:
**30.06.82 Patentblatt 82/26**

(45) Bekanntmachung des Hinweises auf die Patenterteilung:
**01.02.84 Patentblatt 84/5**

(84) Benannte Vertragsstaaten:
**CH DE FR LI**

(56) Entgegenhaltungen:
**DE - A - 2 652 283**
**DE - A - 2 828 409**
**DE - A - 2 934 327**
**DE - A - 2 949 501**

(73) Patentinhaber: **BBC Aktiengesellschaft Brown, Boveri & Cie., Haselstrasse, CH-5401 Baden (CH)**

(72) Erfinder: **Erni, Peter, Dr., Römerstrasse 34, CH-5400 Baden (CH)**
Erfinder: **Kogelschatz, Ulrich, Dr., Obere Parkstrasse 358, CH-5212 Hausen (CH)**
Erfinder: **Straessler, Sigfrid, Dr., Aehrenweg 21, CH-5430 Wettingen (CH)**
Erfinder: **Wiesmann, Hans-Jürg, Dr., Bei der Kirche, CH-8607 Seegräben (CH)**

BUNDESDRUCKEREI BERLIN

Anordnung zur Erzeugung von Ozon durch elektrische Entladung

Die Erfindung bezieht sich auf eine Anordnung zur Erzeugung von Ozon durch elektrische Entladung, mit einem Röhrenozonisator, bestehend aus einer ersten rohrförmigen Elektrode und einer zweiten mit einer dielektrischen Schicht versehenen gleichfalls rohrförmigen Elektrode, deren dielektrische Schicht der ersten Elektrode zugewandt ist und zwischen sich und der ersten Elektrode zugewandt ist und zwischen sich und der ersten Elektrode einen zylindrischen Entladungsraum freiläßt, durch welchen ein sauerstoffhaltiges Gas hindurchleitbar ist, ferner mit einer Anspeiseeinrichtung, umfassend einen mit niederfrequenten Wechselstrom gespeisten Hochspannungstransformator, dessen Sekundärwicklung sowohl ein Speicherkondensator als auch die Reihenschaltung einer Funkenstrekke und des Ozonisators parallelgeschaltet ist.

Anordnungen zur Erzeugung von Ozon dieser Gattung sind beispielsweise in der deutschen Patentanmeldung DE-A-2 934 327 vorgeschlagen worden.

Neben der »klassischen« Anspeisung von Ozonisatoren mit niederfrequentem Wechselstrom von Sinus- oder Rechteckform mit Frequenzen zwischen 50 Hz und mehreren kHz erlangen Ozonerzeugungsanordnungen, die mit impulsförmigen Strömen betrieben werden, zunehmende Bedeutung. So wird beispielsweise in der DE-A-2 652 283 eine Vorrichtung mit rotierenden Elektroden beschrieben. Die Funkenentladung wird dabei durch Annäherung der rotierenden Elektroden der Funkenstrecke an feststehenden Elektroden erzeugt. Die Anschlüsse der Funkenstreckenelektroden an die Stromversorgung erfolgt dabei durch Schleifkontakte. In der deutschen Patentanmeldung DE-A-2 949 501 wird gleichfalls eine Anordnung zur Erzeugung von Ozon vorgeschlagen, bei welcher die Anspeisung des Ozonisators über rotierende Funkenstrecken bewerkstelligt ist.

Im Zuge der Forderungen nach hoher Lebensdauer und Betriebssicherheit ist man jedoch bestrebt, rotierende Funkenstrecken durch rein elektrische/elektronische Ausführungen zu ersetzen. In diese Richtung zielt der Vorschlag in den eingangs zitierten Patentanmeldungen. Zur Erzeugung von Ozon wird dort ein zylindrischer Entladungskanal mit einem niederfrequenten elektrischen Wechselspannungssignal beaufschlagt, das aus einer Sinusspannung mit positiven und negativen Scheitelwerten unterhalb der Zündspannung des Ozonisators und dieser überlagerten Spannungsimpulsen besteht, die sich der Sinusspannung im wesentlichen in deren Maxima und Minima zu einer Spannungsüberhöhung die zum Durchzünden im Ozonisator führt, überlagern. Als Schaltelement zum Durchzünden der Impulse wird u. a. eine vorzugsweise in den Ozonisator integrierte Funkenstrecke verwendet.

Die vorliegende Erfindung zielt in gleicher Richtung. Ihr liegt die Aufgabe zugrunde, eine Anordnung zur Erzeugung von Ozon zu schaffen, die hinsichtlich des Schaltungsaufwandes für die Anspeisung des Ozonisators eine noch weitergehende Vereinfachung und damit gesteigerte Betriebssicherheit und Lebensdauer der gesamten Anordnung mit sich bringt.

Die Lösung dieser Aufgabe bei einer Anordnung zur Erzeugung der eingangs genannten Gattung ist erfindungsgemäß dadurch gekennzeichnet, daß die Funkenstrecke als flächige, passive Funkenstrecke mit definierter Ansprechspannung ausgebildet ist, deren Ansprechspannung unterhalb des Scheitelwertes der Sekundärspannung des Hochspannungstransformators, jedoch oberhalb der Ruhe-Zündspannung des Ozonisators liegt, und daß zumindest der Speicherkondensator oder die passive Funkenstrecke mit dem Ozonisator eine Baueinheit bilden.

Von grundlegender Bedeutung ist hierbei die Verwendung einer flächigen, eine definierte Ansprechspannung aufweisenden Funkenstrecke, wie sie in ihrem grundsätzlichen Aufbau beispielsweise aus der DE-A-2 828 409 im Zusammenhang mit Überspannungsableitern bekanntgeworden ist.

Gemäß einer ersten bevorzugten Ausführungsform des Erfindungsgegenstandes gemäß Anspruch 2 weist die Funkenstrecke zwei auf Abstand einander gegenüberstehende aktive, mit einer Vielzahl von Erhebungen versehene Elektrodenoberflächen auf, welche zur Elektrodenachse rotationssymmetrische und zueinander parallele Flächen sind, wobei die koaxialen Elektroden in einem rohrförmigen Isoliergehäuse angeordnet sind.

In den abhängigen Ansprüchen 3 bis 5 sind eine Reihe von Elektrodenkonfigurationen angeführt, die sich für den erfindungsgemäßen Zweck besonders eignen.

Allen Ausführungen gemeinsam ist die Eigenschaft, daß sich aufgrund der großen aktiven Elektrodenoberfläche und der Vielzahl der sich gegenüberstehenden Erhebungen eine auch über längere Betriebszeit konstante Ansprechspannung ergibt.

Die Erfindung sowie vorteilhafte Weiterbildungen werden nachstehend anhand von mehreren in der Zeichnung dargestellten Ausführungsbeispielen näher erläutert.

In der Zeichnung zeigt

Fig. 1 eine schematische Darstellung einer Anordnung zur Erzeugung von Ozon mit einer Anspeiseeinrichtung, die eine Funkenstrecke umfaßt,

Fig. 2 ein Ausführungsbeispiel der Erfindung mit einer plattenförmigen Funkenstrecke,

Fig. 3 ein Ausführungsbeispiel einer rohrförmigen Funkenstrecke,

Fig. 4 ein Ausführungsbeispiel einer Funkenstrecke mit Elektroden, deren aktive Elektrodenoberflächen als Kegelmantelflächen ausgebildet sind,

Fig. 5 ein erstes Ausführungsbeispiel einer Anordnung zur Erzeugung von Ozon, bei welcher der Speicherkondensator und die Funkenstrecke in einem gemeinsamen Gehäuse untergebracht sind, welches Gehäuse auf den Ozonisator aufgeschoben ist,

Fig. 6 ein zweites Ausführungsbeispiel einer Anordnung zur Erzeugung von Ozon, bei dem der Speicherkondensator innerhalb der rohrförmigen Innenelektrode, die jedoch Funkenstrecke außerhalb der Innenelektrode angeordnet sind,

Fig. 7 ein drittes Ausführungsbeispiel einer Anordnung zur Erzeugung von Ozon mit innerhalb der Innenelektrode angeordnetem, als Rohrkondensator ausgebildeten Speicherkondensator und Plattenfunkenstrecke,

Fig. 8 eine Ausführungsform gemäß derjenigen nach Fig. 7, wobei der Speicherkondensator als koaxialer Wickelkondensator ausgebildet ist,

Fig. 9 ein weiteres Ausführungsbeispiel einer Anordnung zur Erzeugung von Ozon, bei welcher neben Funkenstrecke und Speicherkondensator auch eine Entkopplungsinduktivität innerhalb der Innenelektrode angeordnet sind,

Fig. 10 eine Abwandlung zur Anordnung nach Fig. 9 mit gegenüber dieser andersartigen Anordnung von Speicherkondensator, Funkenstrecke und Entkopplungsinduktivität,

Fig. 11 schlußendlich ein Ausführungsbeispiel einer Anordnung zur Erzeugung von Ozon mit einer rohrförmigen, innerhalb der rohrförmigen Innenelektrode angeordneten Funkenstrecke, wobei der Speicherkondensator gleichfalls im Innern der Innenelektrode angeordnet ist,

Fig. 12 eine Schaltungsanordnung zur Anspeisung einer Vielzahl von Ozonisatoren aus einem gemeinsamen Hochspannungstransformator,

Fig. 13 einen Schnitt durch einen Kessel mit einer Vielzahl von Röhrenozonisatoren.

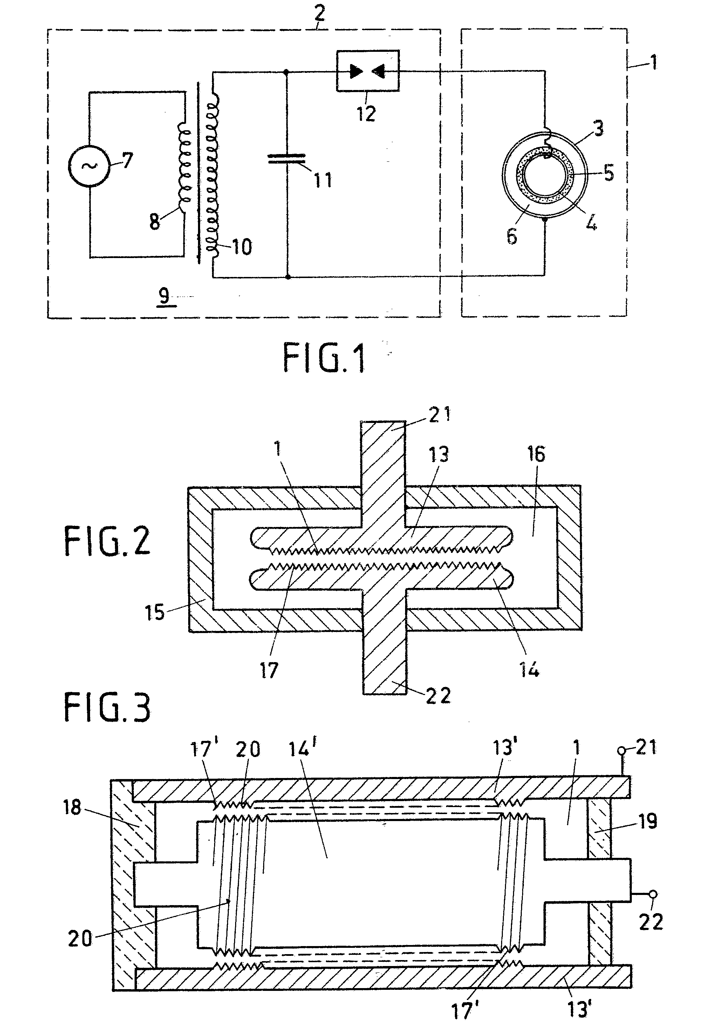

In Fig. 1 ist schematisch ein Ozonerzeuger dargestellt. Er besteht im wesentlichen aus einem Ozonerzeugungselement, dem Ozonisator 1, und einer Anspeiseeinrichtung 2. Der Ozonisator 1 ist als Röhrenozonisator ausgebildet und umfaßt ein äußeres Metallrohr 3 und ein hierzu koaxiales inneres Glasrohr 4. Die Innenfläche des inneren Glasrohres 4 ist mit einer elektrisch leitenden Schicht 5 versehen, die z. B. durch Flammensprühen oder Aufdampfen von Aluminium hergestellt ist. Zwischen innerem und äußerem Rohr liegt der zylindrische Entladungsraum 6, durch welchen ein sauerstoffhaltiges Gas, z. B. Luft, hindurchleitbar ist.

Die Anspeiseeinrichtung 2 umfaßt eine Wechselstromquelle 7, deren Ausgangsstrom rechteckigen, trapezförmigen oder sinusoidalen Verlauf aufweist und in seiner Frequenz einstellbar ist. Die Wechselstromquelle 7 ist an die Primärwicklung 8 eines Hochspannungstransformators 9 angeschlossen. Parallel zur Sekundärwicklung 10 des Hochspannungstransformators 9 liegt ein Speicherkondensator 11. Die eine Klemme der Sekundärwicklung 10 führt unmittelbar zur Außenelektrode des Ozonisators 1, also dem Metallrohr 3, während die Innenelektrode des Ozonisators, die Schicht 5, über eine passive Funkenstrecke 12 mit der anderen Klemme der Sekundärwicklung 10 verbunden ist.

Die Wirkungsweise der Anordnung nach Fig. 1 geht aus folgendem hervor:

Durch den Entladungsraum 6 strömt ein sauerstoffhaltiges Gas oder reiner Sauerstoff. Die Stromquelle 7 liefert einen sinusförmigen Wechselstrom zwischen 50 Hz und mehreren kHz. Der Speicherkondensator 11 wird während der ersten Viertelperiode aufgeladen. Die zwischen seinen Klemmen anliegende Spannung liegt in praktisch gleicher Höhe auch zwischen den Elektroden der Funkenstrecke 12 an, während die Spannung zwischen den Elektroden 3 und 4 des Ozonisators wesentlich kleiner als die Spannung am Speicherkondensator 11 ist, da die Kapazität der Funkenstrecke 12 wesentlich kleiner ist als die Gesamtkapazität des Ozonisators 1 ist. Überschreitet nun die Spannung an der Funkenstrecke 12 deren Ansprechspannung, die höher sein soll als die Zündspannung des Ozonisators 1, so zündet die Funkenstrecke 12 durch, die volle Spannung des Speicherkondensators wird in Folge am Ozonisator wirksam, so daß auch dieser zündet. Infolge des steilen Spannungsanstiegs nach Zünden der Funkenstrecke erfolgt das Durchzünden des Ozonisators 1 ebenfalls sehr rasch — in der Praxis konnten Anstiegsflanken von ca. 20 nsec gemessen werden, wodurch eine homogene Entladung im Gasgemisch erzielt wird, was zu einer wesentlich effektiveren Bildung von Ozon im Entladungsraum 6 führt als bei konventioneller Anspeisung mit Wechselstrom. Der Stromimpuls dauert weniger als 1 μsec, typisch 100 nsec, und ist beendet, bevor die Entladung in eine Funken- oder Bogenentladung umschlagen kann. Dadurch wird eine lokale Erhitzung des Gases im Entladungsraum und damit eine Zerstörung des gebildeten Ozons vermieden.

Die geschilderten Vorgänge wiederholen sich am Beginn der zweiten Halbperiode der Speisespannung. Es ist darauf hinzuweisen, daß die beschriebene Art der Erzeugung von steilflankigen Impulsen am Ozonisator von der Wellenform der Speisespannung weitgehend unabhängig ist, die Speisespannung demgemäß auch Rechteck-Dreieck- oder Trapezform aufweisen kann. Wichtig ist, daß der Scheitelwert der Spannung oberhalb der Zündspannung des Ozonisators 1 und der Funkenstrecke 12 liegt.

Auch kann die Frequenz der Speisespannung in weiten Grenzen liegen. Da die Ozonerzeugungsrate annähernd proportional zur Frequenz der Speisespannung ist, ist es vorteilhaft, die Frequenz des von der Stromquelle 7 gelieferten Stromes einstellbar zu machen. Als Stromquelle eignet sich in diesem Falle vorzüglich ein netzgespeister Umrichter mit Gleichstromzwischenkreis, wie er aus der Stromrichteranlagen-Technik allgemein bekannt ist und deshalb hier nicht näher beschrieben wird.

Aus energetischen Gründen ist es zweckmäßig, wenn die Kapazität des Speicherkondensators 11 annähernd der Dielektrikumskapazität des Ozonisators 1 gewählt wird.

Die optimale Funktionsweise der vorbeschriebenen Anordnung zur Erzeugung von Ozon wird weitgehend von der zeitlichen Konstanz der Ansprechspannung der Funkenstrecke 12 beeinflußt. Passive Funkenstrecken mit nur zwei gegenüberliegenden Spitzenelektroden sind praktisch nicht verwendbar, da sich durch die Entladungsvorgänge die Elektroden und der wirksame Elektrodenabstand derart verändern, daß die Ansprechspannung in weiten Grenzen schwankt.

Die in Fig. 2 dargestellte Funkenstrecke 12 besteht aus zwei Funkenstreckenelektroden 13, 14, die als tellerförmige, in einem bestimmten Abstand voneinander distanzierte Platten, z. B. aus Kupfer oder Graphit, ausgeführt sind. Der Abstand der Platten kann 1 bis 5 mm betragen. Die Platten sind sehr einfach und kostengünstig herstellbar. Sie sind von einem Isoliergehäuse 15, z. B. aus Kunststoff oder Keramik, umgeben. Der Innenraum 16 des Gehäuses ist mit einem Gas, z. B. Argon-Wasserstoffgemisch oder auch Luft, gefüllt. Die einander gegenüberliegenden Oberflächen der Platten sind mit kreisförmigen, konzentrierten Riefen versehen, die in die Oberflächen eingedreht sind. Als sehr vorteilhaft haben sich Plattenfunkenstrecken erwiesen mit 1—2 Riefen pro mm. Die Schärfe der Riefen, die durch den Winkel definiert ist, den die Flanken der Riefen bilden, beträgt vorzugsweise 60°. Durch die Riefen entstehen Grate 17 mit einer Grathöhe von 0,5 bis 2 mm, vorteilhaft 0,5 mm. Die scharfkantigen Grate sind an ihren Flanken von dem Gas umgeben und definieren damit sauer die Zündspannung auch nach längerem Gebrauch unabhängig von der Polarität und zeichnen sich bei einer großen Anzahl von Schaltungen, bis über $10^{10}$, durch relativ geringen Abbrand aus. Beim Durchzünden der Funkenstrecke entsteht ein Zündfunke, und zwar zwischen den sich am nächsten gegenüberliegenden Gratkämmen. Über die Gratlänge, die zwischen 10 cm und 10 m liegen kann, bzw. die Anzahl der Riefen und die Wahl von Materialien, die unterschiedliche Abbrandresistenz aufweisen, unter anderem auch Sinterlegierungen, Wolframsilber sowie Molybdän, kann man unterschiedliche Lebensdauern einstellen, da bei Abbrand einer Riefe oder eines Teiles davon genügend weitere zur Verfügung stehen, über die der Zündfunke durchschlagen kann. Darüber hinaus weisen die genannten Materiale Kupfer und Graphit den Vorteil auf, daß der Abbrand wiederum metallisch ist und somit die Elektroden sich quasi regenerieren.

Bei der in Fig. 3 dargestellten Funkenstrecke 12 sind die Funkenstreckenelektroden als Metallrohr 13', z. B. aus Kupfer, und als eine in dessen Inneren in einem bestimmten Abstand von diesem koaxial angeordnetem Metallzylinder 14', z. B. gleichfalls aus Kupfer, ausgeführt. Das Metallrohr 13' dient gleichzeitig als Gehäuse der Funkenstrecke und ist beidseits durch Deckel 18, 19 verschlossen. Die Deckel 18, 19 dienen darüber hinaus zur Halterung des Metallzylinders 14. Eine derartige Funkenstrecke kann zusammen mit einem Zylinderkondensator zu einem extrem induktivitätsarmen Schaltkreis geschaltet werden, wie später noch ausgeführt wird. In die einander zugewandten Oberflächen der Elektroden sind Gewinde 20 eingedreht, wodurch die Grate 17' entstehen. Die Anzahl sowie die Schärfe der Grate kann durch entsprechende Einstellung der Vorschubbewegung und die Wahl des Drehstahls an der Drehmaschine sehr einfach auf den gewünschten Wert eingestellt werden. Vorteilhafterweise weist das Gewinde rund 1—2 Windungen pro mm auf. Die Grathöhe liegt bei 0,5 mm. Die Schärfe des Gewindes, die durch den Winkel definiert ist, den die Flanken der Grate bilden, beträgt 60°. Das Durchzünden der Funkenstrecken gemäß Fig. 2 und 3 erfolgt bei einem genau definierten Spannungswert über einen Zündfunken, der über die jeweils einander am nächsten gegenüberliegenden Gratkämme durchschlägt. Der Überschlag wandert dabei statistisch über das gesamte Gewinde.

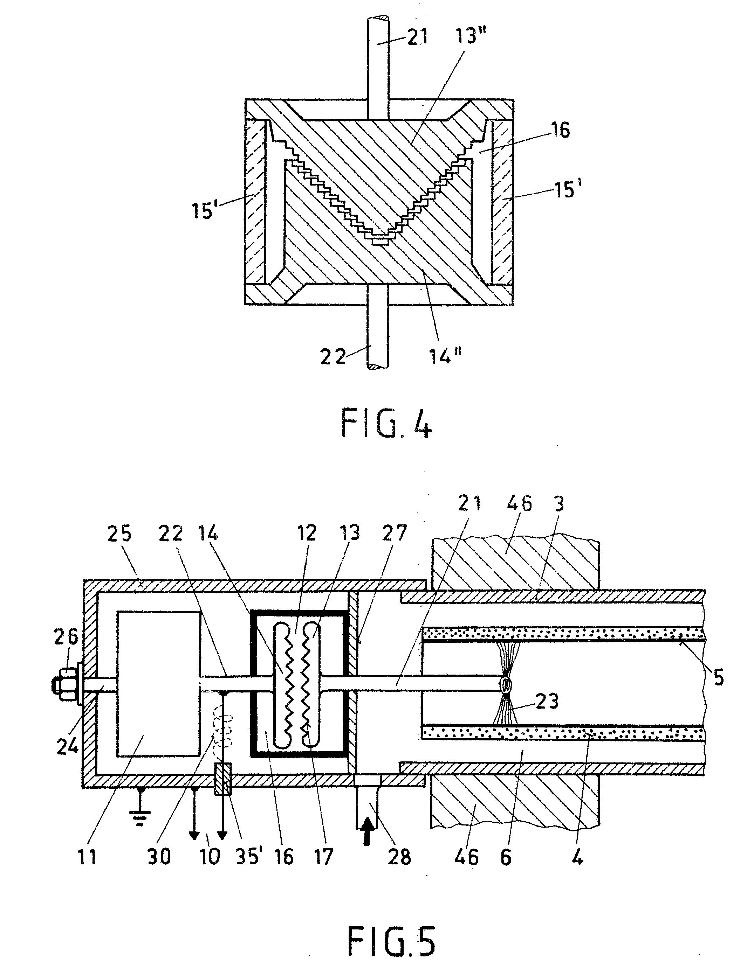

Die Funkenstrecke gemäß Fig. 4 weist ein rohrförmiges Gehäuse 15' aus Isoliermaterial, z. B. Keramik, auf. In das Gehäuse 15 ragen zwei hermetische Abschlüsse in Form zweier napfförmiger metallischer Elektroden 13'' und 14''. Die Ränder der Näpfe 13'' und 14'' sind mit dem Isolierrohr 15' durch eine vakuumdichte Metall-Keramik-Verbindung mit Metallot verbunden. Im Innern der napfförmigen Vertiefungen sind nach außen Elektrodenzuleiten 21, 22 angebracht. Ihre ins Innere des Gehäuses gerichteten gegenüberstehenden Oberflächen sind kegelförmig ausgestaltet. Die eine Elektrode 13'' läuft in einen Kegel aus, der in einen Hohlkegel der anderen Elektrode 14'' hineinragt. Dadurch entstehen zwei kegelmantelförmige Elektrodenoberflächen, die sich überall mit gleichem Abstand gegenüberstehen. Der Öffnungswinkel der Kegel ist vorzugsweise 90°. Somit ist die aktive Elektrodenoberfläche etwa um den Faktor $\sqrt{2}$ größer, als sie bei planparallelen Elektrodenoberflächen (vgl. Fig. 2) möglich wäre. Zur weiteren Vergrößerung der aktiven Elektrodenoberflächen sind beide Kegelmantelflächen durch koaxiale Abstufungen treppenförmig unterteilt. Diese Ausbildung der Funkenstrecke weist darüber hinaus den Vorteil auf, daß abgedampfte Bestandteile der Elektrodenoberfläche sich nicht so leicht auf dem Isolierrohr 15' niederschlagen können.

Die Zündspannung ist im Vergleich zu planen Elektroden aus folgendem Grund wesentlich genauer definiert:

Es ist nicht möglich, plane Elektroden so fein zu polieren, daß eine Grobstrukturierung der Oberfläche vermieden wird. Durch Verunreinigungen unterschiedlicher Abmessungen wird die Homogenität der Entladung beeinträchtigt, d. h. der Zündfunke schlägt zum Beispiel an einer bestimmten, besonders grobstrukturierten Stelle der Oberfläche über einen längeren nicht genau definierten Zeitraum durch. Der Abbrand der Oberfläche erfolgt dann ungleichmäßig, und die Lebensdauer der Elektroden und die Stabilität der Zündspannung werden entsprechend beeinträchtigt.

Versieht man die Elektroden hingegen mit Graten, die sämtliche die gleichen Abmessungen aufweisen, so schafft man dadurch eine Vielzahl von Inhomogenitäten des elektrischen Feldes, die, im Mittel gesehen, die Zündspannung genauer definieren, als dies bei planen Elektroden der Fall ist. Der Abbrand der Grate erfolgt sehr gleichmäßig, wodurch die Stabilität der Zündspannung wesentlich länger erhalten bleibt als bei planen Elektroden.

Der Zündfunke wandert statistisch zeitlich und örtlich gesehen über sämtliche Grate. Im zeitlichen und örtlichen Mittel ergibt sich daraus die Genauigkeit der Zündspannung.

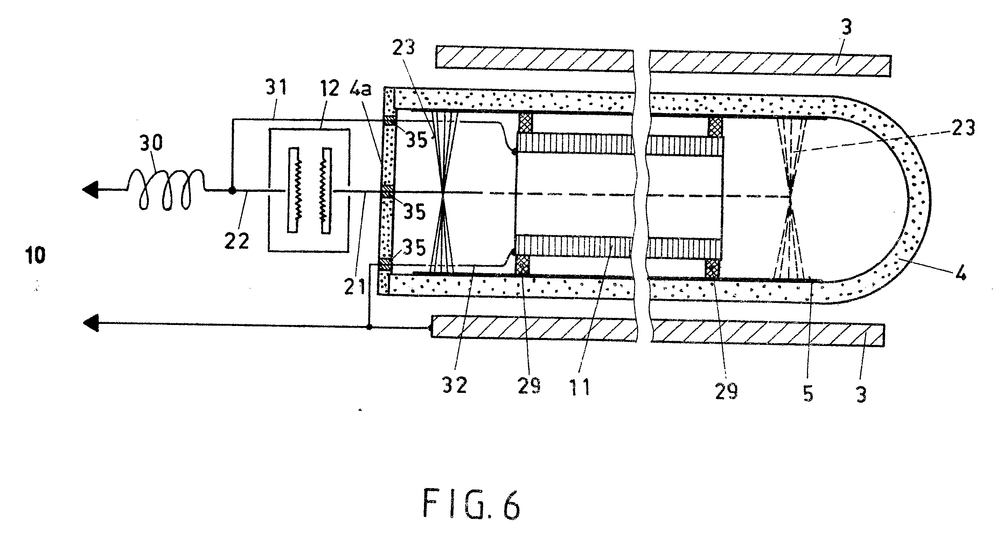

Bei dem in Fig. 5 dargestellten Ausführungsbeispiel einer Anordnung zur Erzeugung von Ozon bilden der Ozonisator 1, die Funkenstrecke 12 und der Speichenkondensator 11 eine Baueinheit. Die als innere Elektrode wirkende Schicht 5 ist über eine Kontaktbürste 23 mit der einen Zuleitung 21 der Funkenstrecke 12 verbunden. Die Funkenstrecke selbst weist einen Aufbau auf, wie er im Zusammenhang mit Fig. 2 oder Fig. 4 beschrieben worden ist. Die andere Zuleitung 22 der Funkenstrecke führt zum Speicherkondensator 11, der hier als Zylinderkondensator mit axialen Zuleitungen ausgebildet ist. Die der Funkenstrecke 12 abgewandte Zuleitung des Kondensators 11 ist als Bolzen 24 ausgebildet und dient zur Befestigung des Speicherkondensators 11 am Gehäuse 25 der Baueinheit mittels Mutter 26.

Der elektrische Anschluß der Baueinheit an die Sekundärwicklung 10 des Hochspannungstransformators 9 erfolgt einerseits am Gehäuse 25 und andererseits an der Zuleitung 22 der Funkenstrecke 12, wobei dieser Anschluß über eine Hochspannungsdurchführung 26 in der Wandung des Gehäuses 25 erfolgt. Eine Zwischenwand 27 trennt den Gehäuseteil, in dem der Speicherkondensator 11 und die Funkenstrecke 12 untergebracht sind, vom Ozonisator 1.

Das Gehäuse 25 der Baueinheit weist einen dem Außendurchmesser des Metallrohres 3 angepaßten Innendurchmesser auf. Somit läßt sich das Gehäuse in einfacher Weise auf den Ozonisator aufschieben und dort in bekannter Weise befestigen. In Fig. 5 ist zusätzlich eine Abstützung 46 der Ozonisatorröhre eingezeichnet, auf welche im nachstehenden (Fig. 13) noch eingegangen wird.

Die Zufuhr des sauerstoffhaltigen Gases in den Entladungsraum 6 des Ozonisators erfolgt über einen Stutzen 28 im ozonisatorseitigen Ende des Gehäuses. Das mit Ozon angereicherte Gas verläßt den Entladungsraum am (nicht dargestellten) Ende des Metallrohres 3.

In den nachfolgenden Fig. 6 bis 11 sind weitere Ausführungsbeispiele des Erfindungsgegenstandes schematisch und vereinfacht wiedergegeben, wobei gleiche Teile mit denselben Bezugsziffern versehen sind wie in den Fig. 1 bis 5.

Bei der Ausführung nach Fig. 6 ist der Speicherkondensator 11 als Rohrkondensator ausgebildet und liegt vollständig im Innern des Glasrohres 4, daß speiseseitig durch einen Deckel 4a verschlossen ist. Abstützungen 29 aus Isoliermaterial sichern eine koaxiale Lage bezüglich des Glasrohres 4. Die Funkenstrecke 12 — sie kann als Plattenfunkenstrecke gemäß Fig. 2 oder auch als kegelförmige gemäß Fig. 4 ausgebildet sein — liegt außerhalb des Glasrohrs 4. Die elektrische Verbindung zwischen der als Innenelektrode wirkenden Schicht 5 und dem einen Anschluß 21 der Funkenstrecke 12 erfolgt analog zu Fig. 5 über eine Kontaktbürste 23. Der andere Anschluß 22 der Funkenstrecke 12 ist einerseits über eine Entkopplungsspule 30 an die eine Klemme der Sekundärwicklung 10 des Hochspannungstransformators 9, andererseits über eine Verbindungsleitung 31 an den einen Anschluß des Speicherkondensators 11 geführt. Der andere Anschluß des Speicherkondensators 11 ist an das Metallrohr 3 geführt, das wiederum mit der anderen Klemme der Sekundärwicklung 10 des Hochspannungstransformators 9 verbunden ist.

Bei der gezeichneten Anordnung müssen die zum Speicherkondensator 11 führenden Leitungen 31 und 32 durch die Kontaktbürste isoliert hindurchgeführt werden. Dies läßt sich vermeiden, wenn die Kontaktbürste 23 im Raum zwischen dem Speicherkondensator 11 und dem üblicherweise verschlossenen Ende des Glasrohrs 4 angeordnet ist. Die Zuleitung 21 führt dann koaxial durch den Rohrkondensator. Diese Variante ist durch strichlierte Darstellung der Kontaktbürste in Fig. 6 veranschaulicht.

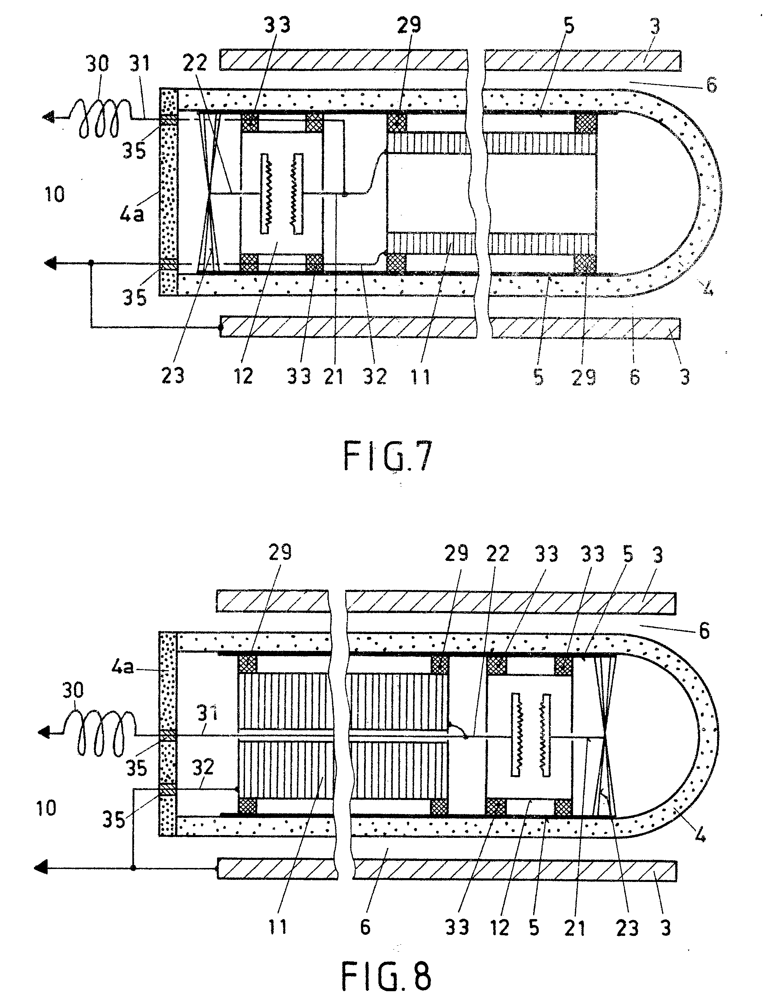

In der Ausführungsform nach Fig. 7 ist neben dem Speicherkondensator auch die Funkenstrecke 12 in das Gasrohr 4 mit Deckel 4a integriert. Beide Teile sind durch Abstützungen 29 bzw. 33 gehalten. Die elektrische Verbindung 31 zwischen der Entkopplungsspule 20 und dem Verbindungspunkt der einen Zuleitung 21 der Funkenstrecke 12 und dem einen Anschluß des Rohrkondensators 11 ist isoliert durch die Kontaktbürste 23 geführt und durchdringt auch die Abstützungen 33 der Funkenstrecke 12. In gleicher Weise führt die Leitung 32 vom anderen Anschluß des Speicherkondensators 11 durch die genannten Abstützungen 33 und isoliert durch die Kontaktbürste 23 zum Metallrohr 3, das an die eine Klemme der Sekundärwicklung 10 des Hochspannungstransformators 9 angeschlossen ist, während das freie Ende der Entkopplungsspule 30 an die andere Klemme der Sekundärwicklung 10 geführt ist.

In der Ausführungsform nach Fig. 8 sind gleichfalls die Funkenstrecke 12 und der Speicherkondensator 11 im Innern des Glasrohres 4 mit Deckel 4a angeordnet. Vom offenen Ende des Glasrohres 4 her gesehen, folgt dabei dem als Wickelkondensator ausgebildete Speicherkondensator 11 die Funkenstrecke 12 und die Kontaktbürste 23. Die Verbindungsleitung zwischen der Entkopplungsspule 30 ist koaxial durch den Speicherkondensator 11 geführt, am funkenstreckenseitigen Anschluß des Speicherkondensators mit diesem und der einen Zuleitung 22 der Funkenstrecke 12 verbunden. Die andere Zuleitung 21 der Funkenstrecke führt zur Kontaktbürste 23. Der andere Anschluß des Speicherkondensators 11 ist über die Leitung 32 mit dem Metallrohr 3 verbunden, das seinerseits mit der einen Klemme der Sekundärwicklung 10 des Hochspannungstransformators 9 verbunden ist. Dessen andere Klemme führt zum freien Anschluß der Entkopplungsspule 30.

Gegenüber der Ausführungsform gemäß Fig. 7 bietet diejenige nach Fig. 8 u. a. den Vorteil einer vereinfachten Leitungsführung im Innern des Glasrohres 4.

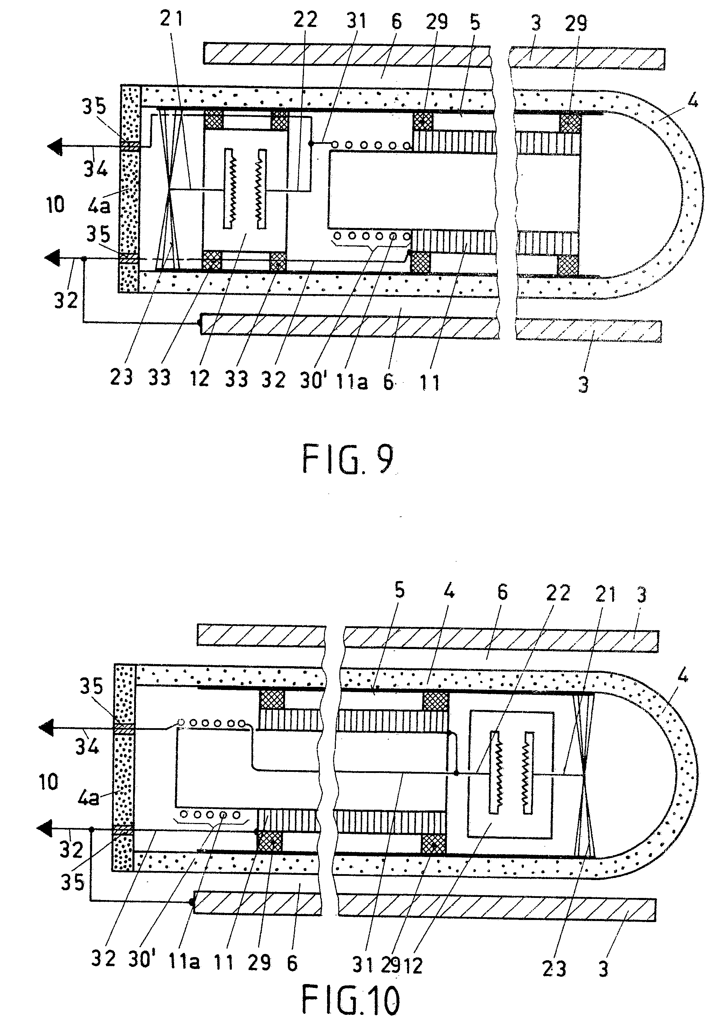

In den Fig. 9 und 10 sind Ausführungsformen einer Anordnung zur Erzeugung von Ozon dargestellt, die im grundsätzlichen Aufbau denjenigen nach den Fig. 7 und 8 entsprechen, bei denen jedoch der Integrationsgrad durch Einbau auch der Entkopplungsspule 30' in das Innere des Glasrohres 4 noch gesteigert ist.

In beiden Varianten ist der Speicherkondensator 11 als Rohrkondensator ausgebildet, wobei das Tragrohr des Belages verlängert ist. Auf dieser Fig. 9 und 10 mit 11a bezeichneten Verlängerung sind die Windungen der Entkopplungsspule 30' aufgebracht. Die unmittelbar benachbarten Anschlüsse von Spule 30' und Rohrkondensator sind im Falle der Fig. 9 unmittelbar miteinander verbunden. Ansonsten entspricht der Aufbau demjenigen nach Fig. 7.

Im Falle der Anordnung nach Fig. 10 führen die einen Anschlüsse von Spule 30' und Rohrkondensator 11 unmittelbar nach außen, wobei in beidseits verschlossenen Glasrohr 4 auf dem der Funkenstrecke 12 abgewandten Ende die Leitungen 32 und 34 über Durchführungen 35 unmittelbar an die Sekundärwicklung 10 des Hochspannungstransformators 9 geführt sind.

Insbesondere die Anordnungen nach den Fig. 9 und 10 weisen einen im Impulszweig der Anspeisung liegenden extrem induktivitätsarmen Aufbau auf, der den Anforderungen nach extrem steilen Anstiegsflanken des den Ozonisator-Entladungsraum 6 beaufschlagenden Stromimpulsen nachkommt.

Darüber hinaus bietet gerade der Aufbau, wie er insbesondere in den Fig. 9 und 10 dargestellt und vorstehend beschrieben wurde, den Vorteil einfachen Aufbaus, großer Servicefreundlichkeit und Einhaltung optimaler Betriebsbedingungen auch nach Austausch einer oder mehrerer Baueinheiten, da die elektrischen Verbindungen nur im impulstechnisch unkritischen Teil der Anspeiseeinrichtung vorgenommen werden müssen.

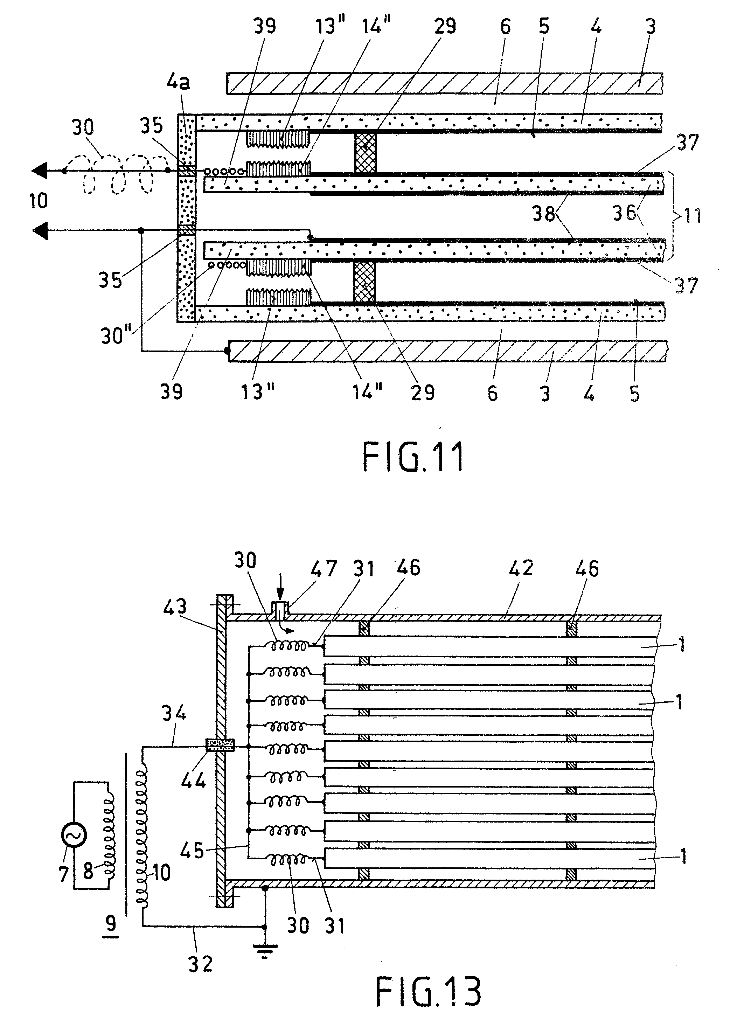

Die gleichen Vorteile lassen sich auch mit einer Ausführungsform der Erfindung erzielen, bei welcher die Funkenstrecke gemäß Fig. 3 ausgebildet ist und wie sie in Fig. 11 vereinfacht dargestellt ist. Hier findet eine Art Rohrkondensator als Speicherkondensator 11 Verwendung, der aus einem Tragrohr 36 aus dielektrischem Material mit innen und außen aufgebrachten Leitbelägen 37 und 38 besteht. Am anspeiseseitigen Ende des Tragrohres 36 ist eine innere rohrförmige Funkenstreckenelektrode 14'' aufgebracht, die mit dem äußeren Belag 37 elektrisch verbunden ist. Als Funkenstreckengegenelektrode dient eine die innere Elektrode 14'' ringförmig und mit Abstand umgebende äußere Elektrode 13'', die mit der Schicht 5 auf dem Glasrohr 4 elektrisch verbunden ist. Beide Elektroden 13'' und 14'' wirken als Röhrenfunkenstrecke, wie sie im Zusammenhang mit Fig. 3 näher beschrieben wurde. Auf dem anspeiseseitigen Ende 39 des Rohres 36 sind ferner die Windungen einer Entkopplungsspule 30'' aufgebracht, wobei das gegen das Innere des Tragrohres 36 gerichtete Spulenende direkt mit der inneren Elektrode 14'' verbunden ist. Die Anspeisung des Ozonisators erfolgt einerseits über das freie Ende der Spule 30'' und andererseits über die elektrisch miteinander verbundenen Teile innerer Belag 38 des Speicherkondensators 11 und Metallrohr 3. Der Vollständigkeit halber sei erwähnt, daß das Rohr 36 im Innern des Glasrohres 4 durch Abstützungen 29 distanziert und gehalten ist. Vorteilhaft bei der Ausführungsform nach Fig. 11 ist neben einfachen induktionsarmem Aufbau und leichter Austauschbarkeit die Tatsache, daß sich mit einfachen Mitteln ein Speicherkondensator 11 in den Ozonisator, d. h. in das Innere des Glasrohres 4 integrieren läßt, der die Bedingung hinsichtlich gleicher Kapazität von Speicherkondensator und Dielektrikumskapazität des Ozonisators erfüllt, wenn die Dielektrizitätskonstanten und die Dicken von Glasrohr 4 und Rohr 36 aus dielektrischem Material entsprechend gewählt werden, da der Speicherkondensator praktisch von gleicher axialer Länge wie das Glasrohr 4 ausgeführt werden kann. Es bedarf keiner näheren Erläuterung, daß das Glasrohr 4 beidseits verschlossen, wobei die elektrischen Zuleitungen vorzugsweise durch den speiseseitigen Deckel 40 mittels Durchführungen 41 geführt sind.

In Fig. 11 ist ferner veranschaulicht, daß die Entkopplungsspule 30 auch außerhalb des Glasrohres 4 angeordnet sein kann. Dies ist durch strichlierte Darstellung der Spule 30 verdeutlicht.

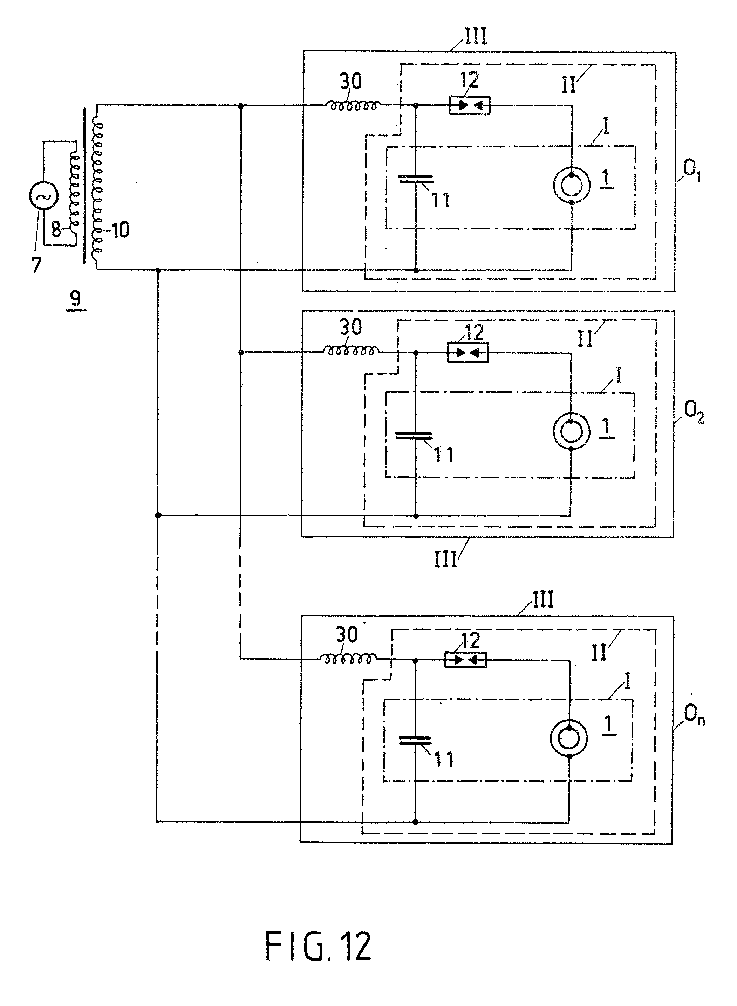

Üblicherweise werden eine Vielzahl von Ozonisatoren von einem gemeinsamen Hochspannungstransformator gespeist. Das Prinzipschaltbild für eine derartige Anordnung ist in Fig. 12 beispielsweise dargestellt. An den Hochspannungstransformator 9 mit Primärwicklung 8 und Sekundärwicklung 10 sind eine Vielzahl von Ozonisatoren 1 mit zugehörigen Funkenstrecken 12, Speicherkondensatoren 11 und Entkopplungsspulen 30 angeschlossen und je gesamthaft mit $O_1$, $O_2$, ..., $O_2$ bezeichnet. Die verschiedenen

Integrationsstufen sind durch die Ziffern I, II und III gekennzeichnet, wobei die jeweils zu einer Baueinheit zusammengefaßten Bauteile durch verschiedene Strichlierung verdeutlicht. In der Integrationsstufe I sind der eigentliche Ozonisator 1 und der zugehörige Speicherkondensator 11 in eine Baueinheit zusammengefaßt, z. B. gemäß Fig. 6. In der nächsthöheren Integrationsstufe II bilden der eigentliche Ozonisator 1, der Speicherkondensator 11 und die Funkenstrecke 12 die Baueinheit, wobei hier alternativ Speicherkondensator 11 und Funkenstrecke 12 gemäß Fig. 5 als auf den Röhrenozonisator aufsteckbare Einheit oder die genannten Bauelemente innerhalb des Ozonisators 1 angeordnet sind (Fig. 7 und Fig. 8). In der letzten Integrationsstufe III, der derzeit als optimale Lösung angesehen wird, ist auch die zugehörige Entkopplungsspule 30' im Röhrenozonisator 1 integriert.

Die geschilderte Integration eines Teils bzw. aller Teile des Impulszweiges bietet dabei insofern keine Schwierigkeiten, da praktisch realisierte Röhrenozonisatoren eine Länge zwischen 1 und 2 m bei lichtem Innendurchmesser des Glasrohres zwischen 40 und 50 mm aufweisen, die Bauelemente Speicherkondensator 11, Funkenstrecke 12 und gegebenenfalls die Spule 30' tatsächlich in das Glasrohr 4 hineinpassen.

Bei ausgeführten Anlagen zur Erzeugung von Ozon sind eine Vielzahl von Röhrenozonisatoren in einem gemeinsamen Kessel untergebracht. Fig. 13 zeigt eine stark vereinfachte Darstellung eines derartigen Kessels 42 mit elektrischer Anspeisung über einen Hochspannungstransformator 9. Der Kessel 42 ist beidseits mit einem Deckel 43 verschlossen, durch den eine Hochspannungszuleitung 34 über eine Hochspannungsdurchführung 44 geführt ist. Bei konventionellen, zum Stand der Technik zählenden Anordnungen führt die Hochspannungszuleitung 34 im Kesselinneren — gegebenenfalls unter Zwischenschaltung einer Sammelschiene 45 — unmittelbar an die inneren Elektroden (nicht eingezeichnet) der Röhrenozonisatoren 1. Die äußeren Elektroden (Metallrohre) liegen auf Erdpotential. Ihre elektrische Verbindung mit dem Kesselgehäuse erfolgt vereinfacht über mit fluchtenden Öffnungen versehene Stützplatten 46. Die Zufuhr des sauerstoffhaltigen Gases erfolgt am Stutzen 47. Das mit Ozon angereicherte Gas verläßt den Kessel am anderen (nicht gezeichneten) Ende des Kessels 42.

Während bei den bekannten Anlagen die Verbindung zwischen Sammelschiene 45 und den inneren Elektroden eine unmittelbare ist, sind in Fig. 12 zwischen der Sammelschiene 45 und den Hochspannungsanschlüssen 31 der Röhrenozonisatoren 1 Entkopplungsspulen 30 zwischengeschaltet, welche den Hochspannungstransformator 9 von den Ozonisatoren impulsmäßig entkoppeln, falls der einzelne Ozonisator 1 ohne integrierte Entkopplungsspulen den Ausführungen nach den Fig. 5, 7, 8 und 11 eingebaut sind. Bei Ozonisatoren nach den Fig. 9, 10 und 11 entfallen diese ganz. Bei den Ausführungsformen, wo neben der Entkopplungsspule auch die Funkenstrecke 12 außerhalb des Ozonisators 1 angeordnet sind, ist eine Anordnung von Speicherkondensator 11, Funkenstrecke 12 und Entkopplungsspule 30 entsprechend Fig. 5 (gestrichelte Variante) möglich.

Ein wesentlicher Vorteil der Erfindung, insbesondere nach den Ausführungen nach den Fig. 5, 9, 10 und 11, ist darin zu sehen, daß herkömmliche Ozonerzeuger, die mit niederfrequenten Wechselstrom direkt aus einem Hochspannungstransformator gespeist werden, ohne großen Aufwand, nämlich allein durch Austausch der Ozonerzeugungselemente, durch solche nach der Erfindung, in sogenannte Impulsozonisatoren umgebaut werden können. Damit lassen sich Wirkungsgrade bei Luftbetrieb bis zu über 10% bzw. 20% bei O₂-Betrieb erzielen. Vorhandene Steuer- und/oder Regeleinrichtungen für die Ozonerzeugungsrate, die auf Frequenzänderung der Primärspannung des Hochspannungstransformators beruhen, lassen sich unverändert weiter betreiben. Es ist einzig darauf zu achten, daß die Ansprechspannung der Funkenstrecke 12 in Relation zur Sekundärspannung derart bemessen wird, daß Mehrfachzündungen der Funkenstrecke 12 und/oder des Ozonisators 1 während einer Halbperiode der Sekundärspannung vermieden werden, da derartige Mehrfachzündungen unter Umständen den Wirkungsgrad des Ozonerzeugungselementes verschlechtern können.

**Patentansprüche**

1. Anordnung zur Erzeugung von Ozon durch elektrische Entladung, mit einem Röhrenozonisator (1), bestehend aus einer ersten rohrförmigen Elektrode (3) und einer zweiten, mit einer dielektrischen Schicht (4) versehenen gleichfalls rohrförmigen Elektrode (5), deren dielektrische Schicht der ersten Elektrode (3) zugewandt ist und zwischen sich und der anderen Elektrode einen zylindrischen Entladungsraum (6) freiläßt, durch welchen ein sauerstoffhaltiges Gas hindurchleitbar ist, ferner mit einer Anspeiseeinrichtung (2), umfassend einen mit niederfrequentem Wechselstrom (zwischen Netzfrequenz und 10 kHz) gespeisten Hochspannungstransformator (9), dessen Sekundärwicklung (10) sowohl ein Speicherkondensator (11) als auch die Reihenschaltung einer Funkenstrecke (12) und des Röhrenozonisators (1) parallelgeschaltet ist, dadurch gekennzeichnet, daß die Funkenstrecke (12) als flächige, passive, mit definierter Ansprechspannung ausgebildet ist, deren Ansprechspannung unterhalb des Scheitelwertes der Sekundärspannung des Hochspannungstransformators (9), jedoch oberhalb der Ruhezündspannung des Ozonisators (1) liegt, und daß zumindest der Speicherkondensator (11) oder die passive Funkenstrecke (12) mit dem Ozonisator (1) eine Baueinheit bilden.

2. Anordnung nach Anspruch 1, dadurch gekennzeichnet, daß die Funkenstrecke (12) zwei auf Abstand gegenüberstehende, mit einer Vielzahl von Erhebungen (17) versehene aktive Elektrodenoberflächen aufweist, welche zur Elektrodenachse rotationssymmetrische und zueinander parallele Flächen sind, wobei die koaxialen Elektroden (13, 14; 13', 14'; 13'', 14'') in einem rohrförmigen Isoliergehäuse (15) angeordnet sind bzw. eine der Elektroden (13') Teil des Gehäuses bildet.

3. Anordnung nach Anspruch 2, dadurch gekennzeichnet, daß die Elektroden (13, 14) tellerförmig ausgebildet sind und zumindest eine der aktiven Elektrodenoberflächen mit einer Vielzahl von konzentrischen Graten (17) versehen ist (Fig. 2).

4. Anordnung nach Anspruch 2, dadurch gekennzeichnet, daß die aktiven Elektrodenoberflächen als Kegelmantelflächen mit gleichen Öffnungswinkel des Kegels ausgebildet sind, wobei die eine Elektrode (13'') in einen Kegel ausläuft, während die andere Elektrode (14'') hohlkegelig ausgebildet ist (Fig. 4).

5. Anordnung nach Anspruch 2, dadurch gekennzeichnet, daß die Elektroden als koaxiale Metallrohre (13', 14') ausgebildet sind, wobei zumindest eine der einander zugewandten aktiven Elektrodenoberflächen mit umlaufenden oder helixförmigen Graten (17') versehen ist (Fig. 3).

6. Anordnung nach Anspruch 1 und einem der Ansprüche 2 bis 5, dadurch gekennzeichnet, daß der Speicherkondensator (11) und die Funkenstrecke (12) als mit dem Ozonisator (1) verbindbare, vorzugsweise austauschbare Einheit ausgebildet sind (Fig. 5).

7. Anordnung nach Anspruch 6, dadurch gekennzeichnet, daß der Speicherkondensator (11) und die Funkenstrecke (12) in einem auf die äußere Elektrode (3) des Ozonisators (1) aufsteck- oder an ihr (3) anflanschbaren Gehäuse (25) angeordnet sind.

8. Anordnung nach Anspruch 1 und einem der Ansprüche 2 bis 5, dadurch gekennzeichnet, daß der Speicherkondensator (11) innerhalb der inneren Elektrode (5) des Ozonisators (1) angeordnet und dort mittels ersten Abstützungen (29) abgestützt ist (Fig. 6).

9. Anordnung nach Anspruch 8, dadurch gekennzeichnet, daß neben dem Speicherkondensator (11) auch die Funkenstrecke (12) innerhalb der inneren Elektrode (5) angeordnet ist und dort mittels zweiten Abstützung (33) abgestützt ist (Fig. 7 und Fig. 8).

10. Anordnung nach Anspruch 9, dadurch gekennzeichnet, daß im Innern der inneren Elektrode (5) von der Speiseseite des Ozonisators (1) her gesehen, sich eine Elektrodenkontaktanordnung (23), die Funkenstrecke (12) und der Speicherkondensator (11) folgen, wobei der eine Anschluß des Speicherkondensators (11) mit der äußeren Elektrode (3) und mit der einen Klemme der Sekundärwicklung (10) des Hochspannungstransformators (9) verbunden ist, daß die andere Klemme der Sekundärwicklung (10) mit der Verbindungsleitung zwischen der einen Zuleitung (21) der Funkenstrecke (12) und dem anderen Anschluß des Speicherkondensators (11) angeschlossen ist und die andere Zuleitung (22) der Funkenstrecke (12) an die Elektrodenkontaktanordnung (23) geführt ist, welche die elektrische Verbindung zwischen der Funkenstreckenzuleitung (22) mit der inneren Elektrode (5) des Ozonisators (1) bildet (Fig. 7).

11. Anordnung nach Anspruch 9, dadurch gekennzeichnet, daß im Inneren der inneren Elektrode (5) von der Speiseseite des Ozonisators (1) her gesehen, dem Speicherkondensator (11) und der Funkenstrecke (12) eine Elektrodenkontaktanordnung (23) folgt, die mit der einen Zuleitung (21) der Funkenstrecke (12) verbunden ist, daß der eine Anschluß des Speicherkondensators (11) mit der äußeren Elektrode (3) des Ozonisators (1) und der einen Klemme der Sekundärwicklung (10) des Hochspannungstransformators (9) verbunden ist, während die andere Klemme der Sekundärwicklung (10) durch den Speicherkondensator (11) hindurchgeführt und mit der Verbindungsleitung zwischen der anderen Zuleitung (22) der Funkenstrecke (12) und dem anderen Anschluß des Speicherkondensators (11) verbunden ist (Fig. 8).

12. Anordnung nach Anspruch 9, 10 oder 11, dadurch gekennzeichnet, daß neben Funkenstrecke (12), Speicherkondensator (11) eine Entkopplungsspule (30) innerhalb der inneren Elektrode (5) des Ozonisators (1) angeordnet ist, die in Reihe mit der Funkenstrecke (12) geschaltet ist.

13. Anordnung nach Anspruch 12, dadurch gekennzeichnet, daß der Speicherkondensator (11) als Rohrkondensator ausgebildet ist, der ein belagfreies Ende (11a) aufweist, auf welches Ende (11a) die Windungen der Entkopplungsspule (30') aufgebracht sind (Fig. 9 und Fig. 10).

14. Anordnung nach Anspruch 9 oder 12, dadurch gekennzeichnet, daß die Elektroden der Funkenstrecke (12) als koaxiale Metallrohre (13'', 14'') ausgebildet sind, von denen das äußere Rohr (13'') im Inneren der inneren Elektrode (5) angeordnet und unmittelbar mit dieser in elektrischer Verbindung steht, daß der Speicherkondensator (11) als Rohrkondensator ausgebildet ist, dessen äußerer Belag (37) mit dem inneren Rohr (14'') der Funkenstrecke (12) unmittelbar elektrisch verbunden ist, daß der innere Belag (38) des Rohrkondensators mit der äußeren Elektrode (3) und der einen Klemme der Sekundärwicklung (10) des Hochspannungstransformators (9) verbunden ist, während das innere Metallrohr (14'') der Funkenstrecke unmittelbar oder unter Zwischenschaltung einer Entkopplungsspule (30 bzw. 30'') an die andere Klemme der Sekundärwicklung (10) geführt ist (Fig. 11).

15. Anordnung nach Anspruch 14, dadurch gekennzeichnet, daß die Windungen der Entkopplungsspule (30'') sowie das innere Metallrohr (14″) der Funkenstrecke auf ein belagfreies Ende (39) des Speicherkondensators (11) aufgebracht sind (Fig. 11).

16. Anordnung nach einem oder mehreren der vorangegangenen Ansprüche, dadurch gekennzeichnet, daß das Innere der inneren Elektrode (5) zumindest anspeiseseitig gegenüber dem Entladungsraum (6) des Ozonisators (1) hermetisch verschlossen ist.

17. Anordnung nach einem oder mehreren der vorangegangenen Ansprüche, dadurch gekennzeichnet, daß die äußere Elektrode des Ozonisators (1) als Metallrohr (3) ausgebildet ist, daß die innere Elektrode (5) durch Aufbringen einer elektrisch leitenden Schicht (5) auf die innere Oberfläche eines koaxial im Metallrohr und von diesem distanziert angeordneten Rohres (4) aus dielektrischem Material gebildet ist, das an dem der Anspeisung abgewandten Ende verschlossen ist.

18. Anordnung nach einem oder mehreren der vorangegangenen Ansprüche, dadurch gekennzeichnet, daß eine Vielzahl von Röhrenozonisatoren in einem gemeinsamen Kessel (42) angeordnet sind, daß zur Halterung und Distanzierung der Röhrenozonisatoren (1) der Kessel (42) mit mehreren Stützplatten (46) mit miteinander fluchtenden Öffnungen versehen ist, deren lichter Durchmesser auf den Außendurchmesser der Röhrenozonisatoren abgestimmt ist (Fig. 13).

## Claims

1. Arrangement for generating ozone by means of an electric discharge, this arrangement possessing a tube-type ozonizer (1), which comprises a first tubular electrode (3) and a second electrode (5), the latter likewise being tubular and being provided with a dielectric layer (4) which faces the first electrode (3) and leaves a cylindrical discharge chamber (6) free, between itself and the other electrode, through which space a gas containing oxygen can be passed, and possessing, furthermore, a power supply unit (2) comprising a high-voltage transformer (9) which is supplied with low-frequency alternating current (between mains-frequency and 10 kHz), the secondary winding (10) of this transformer (9) being connected both in parallel with a storage capacitor (11) and in series with a spark gap (12) and the tube-type ozoniser (1), characterised in that the spark gap (12) is designed as a two-dimensional passive gap, possessing a defined operating voltage which lies below the peak value of the secondary voltage of the high-voltage transformer (9), but above the initiation voltage of the ozonizer (1) under static conditions, and in that at least the storage capacitor (11) or the passive spark gap (12) form, with the ozonizer (1), a unit assembly.

2. Arrangement according to Claim 1, characterised in that the spark gap (12) possesses two active electrode surfaces, which are parallel to each other and are rotationally symmetrical, face one another across an intervening clearance, and are provided with a large number of raised features (17), the coaxial electrodes (13, 14; 13′, 14′; 13″, 14″) being installed inside a tubular insulating housing (15), or one of the electrodes (13′) forming a portion of the housing, as the case may be.

3. Arrangement according to Claim 2, characterised in that the electrodes (13, 14) are of plate-like design, and at least one of the active electrode surfaces is provided with a large number of concentric ridges (17) (Figure 2).

4. Arrangement according to Claim 2, characterised in that the active electrode surfaces are designed as cone-envelope surfaces with identical cone-apex angles, one of the electrodes (13″) running out into a cone, while the other electrode (14″) is configured as a hollow cone (Figure 4).

5. Arrangement according to Claim 2, characterised in that the electrodes are designed in the form of coaxial metal tubes (13′, 14′), at least one of the active electrode surfaces, which face one another, being provided with circular or spiral ridges (17′) (Figure 3).

6. Arrangement according to Claim 1 and one of Claims 2 to 5, characterised in that the storage capacitor (11) and the spark gap (12) are designed as a unit which can be connected to the ozonizer (1) and which is preferably replaceable (Figure 5).

7. Arrangement according to Claim 6, characterised in that the storage capacitor (11) and the spark gap (12) are installed inside a housing (25) which can be slipped onto the outer electrode (3) of the ozonizer (1), or which can be attached to this electrode (3) by means of a flange.

8. Arrangement according to Claim 1 and one of Claims 2 to 5, characterised in that the storage capacitor (11) is installed inside the inner electrode (5) of the ozonizer (1), where it is supported by means of a first set of supports (29) (Figure 6).

9. Arrangement according to Claim 8, characterised in that, in addition to the storage capacitor (11), the spark gap (12) is also installed inside the inner electrode (5), where it is supported by means of a second support (33) (Figures 7 and 8).

10. Arrangement according to Claim 9, characterised in that, inside the inner electrode (5), seen from the supply side of the ozonizer (1), an electrode contact device (23), the spark gap (12), and the storage capacitor (11) follow in sequence, one of the leads of the storage capacitor (11) being connected to the outer electrode (3) and to one of the terminals of the secondary winding (10) of the high-voltage transformer (9), in that the other terminal of the secondary winding (10) is connected to the connecting line between one of the lines (21) supplying the spark gap (12) and the other lead of the storage capacitor (11), while the other line (22) supplying the spark gap (12) is led to the electrode contact device (23) which forms the electrical connection between the line (22) supplying the spark gap (12) and the inner electrode (5) of the ozonizer (1) (Figure 7).

11. Arrangement according to Claim 9, characterised in that, inside the inner electrode (5), seen from the supply side of the ozonizer (1), the storage capacitor (11) and the spark gap (12) are followed by an electrode contact device (23), which is connected to one of the lines (21) supplying the spark gap (12), in that one of the leads of the storage capacitor (11) is connected to the outer electrode (3) of the ozonizer (1) and to one of the terminals of the secondary winding (10) of the high-voltage transformer (9), while the other terminal of the secondary winding (10) is led through the storage capacitor (11) and is connected to the connecting line between the other line (22) supplying the spark gap (12) and the other lead of the storage capacitor (11) (Figure 8).

12. Arrangement according to Claim 9, 10 or 11, characterised in that, in addition to the spark gap (12) and the storage capacitor (11), a decoupling coil (30) is installed inside the inner electrode (5) of the ozonizer (1), this coil (30) being connected in series with the spark gap (12).

13. Arrangement according to Claim 12, characterised in that the storage capacitor (11) is configured as a tubular capacitor, this capacitor possessing an uncoated end (11a) to which the turns of the decoupling coil (30') are applied (Figures 9 and 10).

14. Arrangement according to Claim 9 or 12, characterised in that the electrodes of the spark gap (12) are designed as coaxial metal tubes (13'', 14''), of which the outer tuve (13'') is located inside the inner electrode (5) and is in direct electrical connection therewith, in that the storage capacitor (11) is configured as a tubular capacitor, the outer coating (37) of which is electrically connected directly to the inner tube (14'') of the spark gap (12), in that the inner coating (38) of the tubular capacitor is connected to the outer electrode (3) and to one of the terminals of the secondary winding (10) of the high-voltage transformer (9), while the inner metal tube (14'') of the spark gap is led to the other terminal of the secondary winding (10), either directly or with the intermediate connection of a decoupling coil (30 or 30'') (Figure 11).

15. Arrangement according to Claim 14, characterised in that the turns of the decoupling coil (30'') and the inner metal tube (14'') of the spark gap are applied to an uncoated end (39) of the storage capacitor (11) (Figure 11).

16. Arrangement according to one or several of the preceding claims, characterised in that the interior of the inner electrode (5) is hermetically sealed with respect to the discharge chamber (6) of the ozonizer (1), at least on the supply side.

17. Arrangement according to one or several of the preceding claims, characterised in that the outer electrode of the ozonizer (1) is designed as a metal tube (3), in that the inner electrode (5) is formed by applying an electrically conducting layer (5) to the inner surface of a tube (4) which is made of a dielectric material and is located coaxially inside the metal tube, and spaced therefrom, this tube (4) being sealed at the end facing away from the supply connections.

18. Arrangement according to one or more of the preceding claims, characterised in that a large number of tube-type ozonizers are installed inside a common shell (42), in that, in order to retain the tube-type ozonizers (1), and to space them one from another, the shell (42) is provided with a plurality of supporting plates (46), possessing openings which are in alignment one with another, the unobstructed diameter of these openings being matched to the external diameter of the tube-type ozonizers (Figure 13).

**Revendications**

1. Dispositif pour la production d'ozone par décharge électrique comportant un ozoniseur à tubes (1) formé d'une première électrode tubulaire (3) et d'une deuxième électrode également tubulaire (5) pourvue d'une couche diélectrique (4), la couche diélectrique étant tournée vers la première électrode (3) et étant séparée de celle-ci par une chambre de décharge cylindrique (6) à travers alquelle on peut faire passer un gaz contenant de l'oxygène, et un dispositif d'alimentation (2) comportant un transformateur à haute tension (9) alimenté par du courant alternatif à basse fréquence dont l'enroulement secondaire (10) ainsi qu'un condensateur de stockage (11) et le montage en série d'un éclateur (12) et de l'ozoniseur à tubes (1) sont connectés en parallèle, caractérisé en ce que l'éclateur (12) a la forme d'un éclateur passif plan à tension d'excitation définie, cette tension d'excitation étant inférieure à la valeur de crête de la tension du secondaire du transformateur à haute tension (9), mais étant supérieure à la tension d'allumage de repos de l'ozoniseur (1), et au moins le condensateur de stockage (11) ou l'éclateur passif (12) forme une unité avec l'ozoniseur (1).

2. Dispositif suivant la revendication 1, caractérisé en ce que l'éclateur (12) présente deux surfaces d'électrodes actives pourvues d'un grand nombre de surélévations (17) et opposées à une certaine distance l'une de l'autre, qui sont des surfaces parallèles l'une à l'autre et présentant une symétrie de roation par rapport à l'axe des électrodes, les électrodes coaxiales (13, 14; 13', 14'; 13'', 14'') étant montées dans un boîtier isolant tubulaire ou une des électrodes (13') faisant partie du boîtier.

3. Dispositif suivant la revendication 2, caractérisé en ce que les électrodes (13, 14) ont la forme de plateaux et au moins une des surfaces d'électrodes actives est pourvue d'un grand nombre d'arêtes concentriques (17) (Fig. 2).

4. Dispositif suivant la revendication 2, caractérisé en ce que les surfaces d'électrodes actives ont la forme d'aires latérales de cônes présentant le même angle de conicité, la première électrode (13″) se terminant en un côme, tandis que l'autre électrode (14″) a la forme d'un cône en creux (Fig. 4).

5. Dispositif suivant la revendication 2, caractérisé en ce que les électrodes ont la forme de tubes métalliques coaxiaux (13′, 14′), au moins une des surfaces d'électrodes actives tournées l'une vers l'autre étant pourvue d'arêtes circulaires ou héliocoïdales (17′) (Fig. 3).

6. Dispositif suivant la revendication 1 et l'une quelconque des revendications 2 à 5, caractérisé en ce que le condensateur de stockage (11) et l'éclateur (12) ont la forme d'une unité de préférence remplaçable (Fig. 5) pouvant être connectée à l'ozoniseur (1).

7. Dispositif suivant la revendication 6, caractérisé en ce que le condensateur de stockage (11) et l'éclateur (12) sont montés dans un boîtier pouvant être glissé sur l'électrode externe (3) de l'ozoniseur (1) ou pouvant y être fixé au moyen de brides.

8. Dispositif suivant la revendication 1 et l'une quelconque des revendications 2 à 5, caractérisé en ce que le condensateur de stockage (11) est disposé à l'intérieur de l'électrode interne (5) de l'ozoniseur (1) et y est soutenu au moyen de premiers supports d'entretoisement (29) (Fig. 6).

9. Dispositif suivant la revendication 8, caractérisé en ce qu'en plus du condensateur de stockage (11), l'éclateur (12) est aussi monté à l'intérieur de l'électrode interne (5) et y est soutenu au moyen d'un second support (33) (Fig. 7 et Fig. 8).

10. Dispositif suivant la revendication 9, caractérisé en ce qu'à l'intérieur de l'électrode interne (5), vue du côté d'alimentation de l'ozoniseur (1), se succèdent un dispositif de contact d'électrode (23), l'éclateur (12) et le condensateur de stockage (11), la première connexion du condensateur de stockage (11) étant reliée à l'électrode externe (3) et à la première borne de l'enroulement secondaire (10) du transformateur à haute tension (9), l'autre borne du secondaire (10) est connectée par le conducteur de jonction entre le premier conducteur d'alimentation (22) de l'éclateur (12) et l'autre connexion du condensateur de stockage (11) et l'autre conducteur d'alimentation (22) de l'éclateur (12) est amené au dispositif de contact d'électrode (23) qui forme la liaison électrique entre le conducteur d'alimentation d'éclateur (22) et l'électrode interne (5) de l'ozoniseur (1) (Fig. 7).

11. Dispositif suivant la revendication 9, caractérisé en ce qu'à l'intérieur de l'électrode interne (5) vue du côté d'alimentation de l'ozoniseur (1), au condensateur de stockage (11) et à l'éclateur (12) succède un dispositif de contact d'électrode (23) qui est connecté au premier conducteur d'alimentation (21) de l'éclateur (12), la première connexion du condensateur de stockage (11) est reliée à l'électrode externe (3) de l'ozoniseur (1) et à la première borne de l'enroulement secondaire (10) du transformateur à haute tension (9) tandis que l'autre borne de l'enroulement secondaire (10) traverse le condensateur de stockage (11) et est reliée par le conducteur de jonction entre l'autre conducteur d'alimentation (22) de l'éclateur (12) et l'autre connexion du condensateur de stockage (11) (Fig. 8).

12. Dispositif suivant la revendication 9, 10 ou 11, caractérisé en ce qu'en plus de l'éclateur (12) et du condensateur de stockage (11), une bobine de découplage (30) est montée à l'intérieur de l'électrode interne (5) de l'ozoniseur (1) et est connectée en série avec l'éclateur (12).

13. Dispositif suivant la revendication 12, caractérisé en ce que le condensateur de stockage a la forme d'un condensateur tubulaire qui présente une extrémité (11a) dépourvue d'armature sur laquelle sont appliquées les spires de la bobine de découplage (30′) (Fig. 9 et Fig. 10).

14. Dispositif suivant la revendication 9 ou 12, caractérisé en ce que les électrodes de l'éclateur (12) ont la forme de tubes métalliques coaxiaux (13″ et 14″) parmi lesquels le tube extérieur (13″) est monté à l'intérieur de l'électrode interne (5) et est directement connecté à celle-ci, le condensateur de stockage (11) a la forme d'un condensateur tubulaire dont l'armature extérieure (37) est connectée directement au tube intérieur (14″) de l'éclateur (12), le revêtement intérieur (38) du condensateur tubulaire est connecté à l'électrode extérieure (3) et à la première borne de l'enroulement secondaire (10) du transformateur à haute tension (9) tandis que le tube métallique intérieur (14″) de l'éclateur est amené directement ou avec intercalation d'une bobine de découplage (30 ou 30″) à l'autre borne de l'enroulement secondaire (10) (Fig. 11).

15. Dispositif suivant la revendication 14, caractérisé en ce que les spires de la bobine de découplage (30″) ainsi que le tube métallique intérieur (14″) de l'éclateur sont placés sur une extrémité sans armature (39) du condensateur de stockage (11) (Fig. 11).

16. Dispositif suivant l'une quelconque des revendications précédentes, caractérisé en ce que l'intérieur de l'électrode interne (5) est hermétiquement fermé, au moins du côté d'alimentation, par rapport à l'espace de décharge (6) de l'ozoniseur (1).

17. Dispositif suivant l'une quelconque des revendications précédentes, caractérisé en ce que l'électrode externe de l'ozoniseur (1) a la forme d'un tube métallique (3), l'électrode interne (5) est formée par application d'une couche conductrice électrique (5) sur la surface interne d'un tube (4) disposé coaxialement dans le tube métallique et espacée de celui-ci, le tube (4) étant fermé à l'extrémité opposée à l'alimentation.

18. Dispositif suivant l'une quelconque des revendications précédentes, caractérisé en ce que plusieurs ozoniseurs à tubes sont montés dans une enceinte commune (42) et, pour maintenir et espacer les ozoniseurs à tubes (1), l'enceinte (42) est pourvue de plusieurs plaques percées d'ouvertures alignées dont le diamètre est déterminé par le diamètre extérieur des ozoniseurs à tubes (Fig. 13).

FIG.1

FIG.2

FIG.3

FIG. 4

FIG.5

FIG.6

FIG.7

FIG.8

FIG. 9

FIG.10

FIG.11

FIG.13

FIG. 12

25